# EUROPEAN PATENT SPECIFICATION

(11) **EP 0 334 150 B1**
(45) Date of publication and mention of the grant of the patent: **09.06.1993**
(21) Application number: 89104390.3
(22) Date of filing: 13.03.1989
(51) Int. Cl.: H02K 5/04, H02K 5/14, H02K 5/24, H02K 5/16

(54) **Electric commutator motor, particularly for domestic laundry washers**
Elektrischer Kommutatormotor, insbesonders für Haushalts-Waschmaschinen
Moteur commutateur électrique, en particulier pour machines à laver domestiques

(30) Priority: 24.03.1988 IT 4571188
(43) Date of publication of application: 27.09.1989
(73) Proprietor: SOLE S.p.A., I-33170 Pordenone (IT)
(72) Inventor: Rossi, Luigi, I-31046 Oderzo (Treviso) (IT); Martin, Renato, I-33170 Pordenone (IT)
(74) Representative: Grünecker, Kinkeldey, Stockmair & Schwanhäusser Anwaltssozietät

(56) References cited:
- DE-A- 2 727 119
- DE-U- 7 002 020
- GB-A- 2 056 789
- US-A- 4 335 323

## Description

The present invention relates to an electric commutator motor of the universal type normally adapted to operate at controlled speeds and to be employed in a wide range of applications, for instance in domestic laundry washers and the like.

A motor of the type defined above generally comprises a hollow stator of a ferromagnetic material with an associated copper winding, and a rotor formed of a laminated stack of a ferromagnetic material and provided with grooves for containing the strands of the rotor winding. The shaft of the rotor carries a fixedly mounted commutator and is mounted by means of two bearings in two end plates interconnected by a number of tension bolts.

The assembly and centering of the motor require additional structural elements such as screws, Seeger rings, bushings, pins and the like, resulting in a complicated construction and preventing the advantageous rationalization of production and storage of components.

A principal object of the invention is the provision of an electric commutator motor based on a construction concept different from that of conventional motors for eliminating certain components to result in a more compact construction permitting the motor to be manufactured and assembled by automatized systems and equipment.

The proposed solution permits the assembly of motors of different dimensions and power output with the employ of standardized and interchangeable components, and is conducive to obtain improved performance as regards noise generation, operating temperatures and electrical and mechanical protection.

These objects are attained according to the invention in an electric commutator motor, particularly for domestic laundry washers, comprising a hollow stator of a ferromagnetic material with an associated copper winding, and a rotor formed of a laminated stack of a ferromagnetic material provided with grooves for containing the strands of the rotor winding, the shaft of the rotor carrying a communtator fixedly secured thereto, a number of support bearings and, when so required, a pulley and a rotary speed sensor component, said motor being characterized in that said rotor in a pre-assembled state is enclosed between two symmetric half shells of an amagnetic material provided with profiled end portions and axial extensions for mounting thereon the components secured to said shaft, said half shells being adapted to be inserted into said stator and to be engaged with the end portions of the pole pieces thereof.

Further characteristics and advantages of the motor according to the invention will become more clearly evident from the following description, given by way of example with reference to the accompanying drawings, wherein:
- fig. 1: shows a diagrammatic elevational view of a motor according to an embodiment of the invention,
- fig. 2: shows a sideview of one of the two half shells enclosing the rotor of the motor, and
- fig. 3: shows an end view of the motor shown in fig. 1.

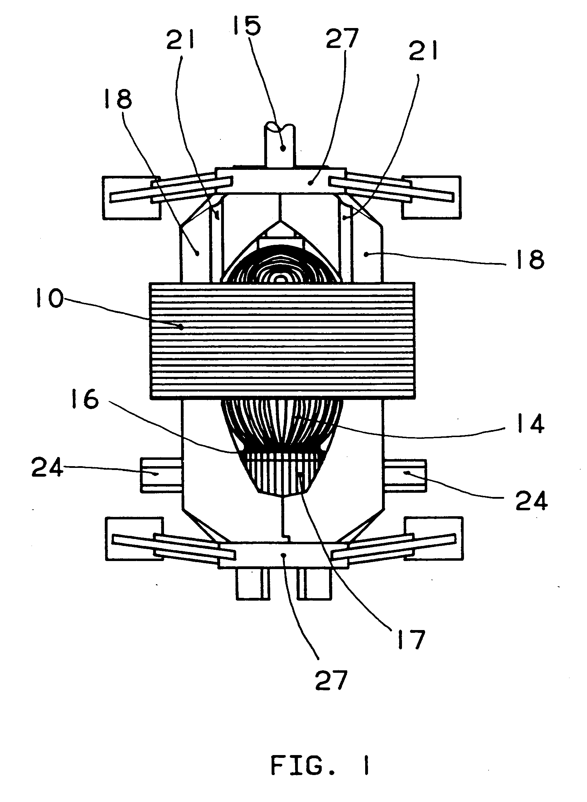

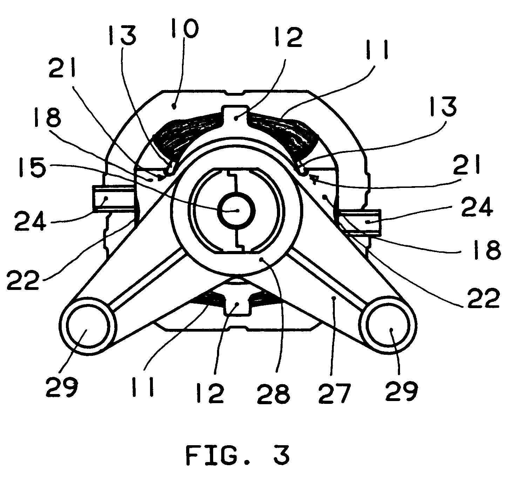

The motor according to the invention generally comprises a conventional hollow stator 10 of a ferromagnetic material (fig.1) internally provided with a copper wire winding 11 wound upon two insulating elements 12 disposed at opposite locations and defining respective pole pieces 13 (fig. 3).

The motor further comprises a rotor 14 fixedly secured to a shaft 15 and conventionally formed of a laminated stack of a ferromagnetic material provided with grooves for containing the strands of the rotor winding 16 (fig. 1).

Fixedly secured to shaft 15 are a commutator 17, a pair of bearings and, when required, one or more pulleys and a rotary speed sensor component. These wholly conventional components have not been depicted in the drawings for the sake of simplicity.

Rotor 14 has to be mounted and centered within stator 10, to which purpose the state of the art requires the employ of two opposite end plates interconnected by tension bolts, and a number of additional structural elements. The machining of the end plates has to be highly accurate, and the assembly of the motor is a complicated, time-consuming and laborious operation.

According to the principal object of the invention, these structural elements and the respective assembly operations are to be eliminated.

The invention instead proposes the employ of only two symmetric half shells 18 formed of an amagnetic material such as plastic, aluminum, a zinc alloy, stainless steel or the like, between which rotor 14 is inclosed for subsequent insertion into the internal space of stator 10.

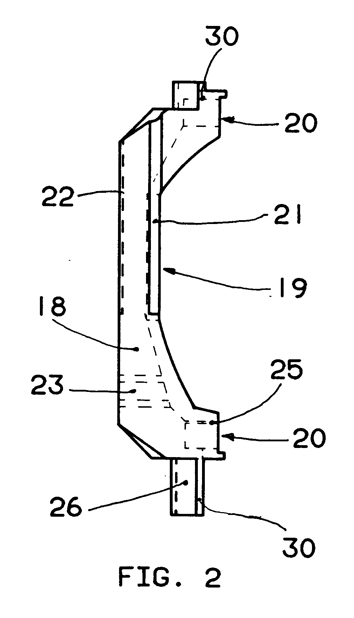

An individual half shell 18 is depicted in detail in fig. 2. It has a concave internal surface 19 adapted to conform to the exterior surface of rotor 14, and two opposite profiled end portions 20 adapted to be engaged with complementary end portions of the other half shell so as to enclose the components fixedly secured to rotor shaft 15.

The outer surface of each half shell 18 is formed with guide means for the insertion of rotor 14 into stator 10 in accurate alignment. These guide means specifically include two opposite guides 21 adapted to cooperate with the end portions of the pole pieces 13 of stator winding 11, and a guide 22 adapted to cooperate with an internal projection of stator 10 (fig. 3).

Both guides 21 and guides 22 extend over a limited length with respect to the body of the half shell so that their respective ends act as insertion limiting stops as the rotor is inserted into the stator. In this manner an additional advantage is obtained by the possibility of using half shells of the same dimensions for different dimentions of the rotor/stator (for example, from 35 mm to 55 mm), to always ensure proper centering of the rotor within the stator.

The half shells 18 are additionally provided with a seat 23 for mounting a brush carrier element 24. This seat is simultaneously fashioned as the respective half shell is being formed, and located adjacent the end portion thereof at the side corresponding to the commutator 17 secured to shaft 15.

During the process of forming the half shells, each half shall is additionally provided with an internal partition 25 (fig. 2) for preventing the carbon powder produced by the wear of the brushes from entering the voids between the components of the adjacent bearing.

At one of its end portions each half shell 18 is finally provided with an axial extension 26 formed with a seat 30 for the motor mounting brackets and for the optional mounting of rotational speed sensor components.

In the example depicted in figs. 1 and 3, the motor mounting brackets 27 are formed as plate members having a tubular sleeve portion 28 for mounting on the respective seat 30, and two arm portions provided with holes 29 for securing them, by means of suitable known fixing elements such as bolts and nuts, to the machine to be equipped with the motor, for instance to the tub of a domestic laundry washer.

It is of course possible to employ different mounting elements, depending on the type of machine in which the motor is to be installed; it is thus for instance possible to employ resilient vibration-dampener mounting devices.

The motor according to the invention definitely offers the following important advantages over previously known motors:
- reduction of the number of structural components, particularly elimination of end plates and associated tension bolts,
- simplicity of assembly, which may even be automatized, by the employ of the half shells which are simply joined and inserted into the stator in a force fit;
- possibility of pre-assembling the rotor including its bearings, pulleys and rotary speed sensor components;
- possibility of using half shells and motor shafts of the same shape and dimensions for motors of different power output within certain limits;
- possibility of providing the half shells with mounting means for various components such as brushes, bearings, mounting supports and the like, and suitable protection means (dust-retaining partitions);
- reduction of the noise generation due to turbulent air flows thanks to the more regular configuration of the voids between the rotor and the stator;
- reduction of the operating temperature of the motor thanks to improved ventilation due to the fact that the stator winding is not enclosed between end plates.

## Claims

1. An electric commutator motor, particularly for domestic laundry washers, comprising a hollow stator (10) of a ferromagnetic material with an associated copper winding (11), and a rotor (14) formed of a laminated stack of a ferromagnetic material provided with grooves for containing the strands of the rotor winding, the shaft (15) of said rotor carrying a commutator (17) fixedly secured thereto, a number of support bearings, and when so required, a pulley and a rotary speed sensor component, said motor being characterized in that said rotor (14) in a pre-assembled state is enclosed between two symmetric half-shells (18) of an amagnetic material provided with profiled end portions (20) and axial extensions (26) for mounting said components secured to said shaft (15), said half shells (18) being adapted to be inserted into said stator (10) and to be engaged with the end portions of the pole pieces (13) thereof.

2. A motor according to claim 1, characterized in that each half shell (18) is formed as a one-piece member and provided with guides (21, 22) for engagement with said stator (10) on its outer surface, and on its inner surface, with a transverse dust-protection wall (25) at the side facing said commutator (17).

3. A motor according to claim 1, characterized in that each half shell (18) is formed with a seat (23) for mounting a respective brush support element (24).

4. A motor according to claim 1, characterized in that each half shell (18) has two seats (30) formed at its end portions adapted to be mounted in a conventional resilient vibration dampener mounting device or in a rigid mounting bracket (27) provided with means (29) for mounting the motor in a machine to be driven thereby.

## Patentansprüche

1. Elektrischer Kommutatormotor, insbesondere für Haushaltswaschmaschinen, enthaltend einen hohlen Stator (10) aus ferromagnetischem Material mit einer zugeordneten Kupferwicklung (11) und einem Rotor (14) aus einem Blechstapel aus ferromagnetischem Material mit Rillen zur Aufnahme der Rotorwicklungsstränge, wobei die Rotorwelle (15) einen fest daran angebrachten Kommutator (17), mehrere Traglager und gegebenenfalls eine Riemenscheibe und ein Rotordrehzahlelement trägt, wobei der Motor dadurch gekennzeichnet ist, daß der Rotor (14) in einem vormontierten Zustand zwischen zwei symmetrischen Halbschalen (18) aus einem amagnetischen Material eingeschlossen ist, die mit profilierten Endabschnitten (20) und axialen Verlängerungen (26) zur Montage der an der Welle (15) befestigten Bauelemente versehen ist, wobei die Halbschalen (18) dazu eingerichtet sind, in den Stator (10) eingeführt zu werden und mit den Endabschnitten der Polstücke (16) desselben in Eingriff zu gelangen.

2. Motor nach Anspruch 1, dadurch gekennzeichnet, daß jede Halbschale (18) aus einem einstückigen Element besteht und mit Führungen (21, 22) für den Eingriff mit dem Stator (18) an seiner Außenseite versehen ist und an seiner Innenseite eine querlaufende Staubabscheidewand (28) auf der dem Kommutator (17) zugewandten Seite aufweist.

3. Motor nach Anspruch 1, dadurch gekennzeichnet, daß jede Halbschale (18) mit einem Sitz (23) zur Montage eines entsprechenden Bürstentragelements (24) versehen ist.

4. Motor nach Anspruch 1, dadurch gekennzeichnet, daß jede Halbschale (18) zwei Sitze (30) an ihren Endabschnitten aufweist, die dazu eingerichtet sind, in einer üblichen elastischen Vibrationsdämpfer-Montagevorrichtung oder in einem steifen Montagebügel (27) montiert zu werden, der mit Einrichtungen (29) zum Montieren des Motors in einer von ihm angetriebenen Maschine versehen ist.

## Revendications

1. Moteur électrique à collecteur, notamment pour des machines à laver le linge domestiques, comprenant un stator creux (10) en un matériau ferromagnétique avec un enroulement de cuivre associé (11), et un rotor (14) formé d'un empilage feuilleté d'un matériau ferromagnétique et comprenant des rainures pour y loger les fils de l'enroulement de rotor, un collecteur (17) étant monté sur l'arbre de ce rotor et en étant solidarisé, un certain nombre de paliers supports et, si nécessaire, une poulie et un détecteur de la vitesse de rotation, ce moteur étant caractérisé en ce qu'à l'état préalablement assemblé, ce rotor (14) est enfermé entre deux demi-coquilles symétriques (18) en un matériau amagnétique comportant des portions terminales profilées (20) et des prolongements axiaux (26) pour le montage des composants fixés sur l'arbre (15), ces demi-coquilles (18) étant adaptées pour être introduites dans le stator (10) et pour coopérer avec les portions terminales des pièces polaires (13) du stator.

2. Moteur selon la revendication 1, caractérisé en ce que chaque demi-coquille (18) est formée en tant qu'élément monobloc et comporte des guides (21, 22) pour coopérer avec le stator (10) sur sa surface extérieure et sur sa surface intérieure, avec une paroi transversale de protection contre la poussière (25) sur le côté en vis-à-vis du collecteur (17).

3. Moteur selon la revendication 1, caractérisé en ce que chaque demi-coquille (18) comporte un siège (23) pour le montage d'un élément support de balai respectif (24).

4. Moteur selon la revendication 1, caractérisé en ce que deux sièges (30) sont formés sur les portions terminales de chaque demi-coquille (18), adaptés pour être montés dans un dispositif de montage à amortisseurs de vibration élastiques ou dans un support de montage rigide (27) comportant des moyens (29) pour le montage du moteur dans une machine à entraîner par celui-ci.
